# EUROPÄISCHE PATENTSCHRIFT

(11) **EP 2 920 867 B1**
(45) Veröffentlichungstag und Bekanntmachung des Hinweises auf die Patenterteilung: **30.09.2020**
(21) Anmeldenummer: 13780063.7
(22) Anmeldetag: 10.10.2013
(51) Int. Cl.: H02K 5/20, F16C 35/077, H02K 5/15, H02K 5/22, H02K 9/19, F16C 35/04, F16C 19/06

(54) **ELEKTROMOTOR MIT EINEM STATOR**
ELECTRIC MOTOR WITH A STATOR
MOTEUR ÉLECTRIQUE DOTÉ D'UN STATOR

(30) Priorität: 19.11.2012 DE 102012022481
(43) Veröffentlichungstag der Anmeldung: 23.09.2015
(73) Patentinhaber: SEW-EURODRIVE GmbH & Co. KG, 76646 Bruchsal (DE)
(72) Erfinder: DITTES, Gerhard, 75053 Gondelsheim (DE); MASUCH, Volker, 75038 Oberderdingen (DE)
(86) Internationale Anmeldenummer: PCT/EP2013/003041
(87) Internationale Veröffentlichungsnummer: WO 2014/075752

(56) Entgegenhaltungen:
- CN-A- 102 384 185
- DE-A1-102010 050 348
- JP-A- H07 322 567

## Beschreibung

Die Erfindung betrifft einen Elektromotor mit einem Stator.

Es ist allgemein bekannt, dass ein Elektromotor mit einem Stator ausgeführt ist.

**Aus der** JP H07 322 567A **ist ein flüssigkeitsgekühlter Motor bekannt, der ein durch ein Teil axial durchgehenden Kanal aufweist.**

**Aus der** DE 10 2010 050 348 A1 **ist ein flüssigkeitsgekühlter Motor bekannt, der ein als Strangguss hergestelltes Gehäuseteil aufweist.**

**Aus der** CN 102 384 185 A **ist ein als Lageraufnahme fungierendes Ringteil bekannt.**

Der Erfindung liegt daher die Aufgabe zugrunde, einen Elektromotor mit einem Stator weiterzubilden, wobei eine kompakte Ausführung mit hoher Leistung pro Bauvolumen erreichbar sein soll.

Erfindungsgemäß wird die Aufgabe bei dem Elektromotor mit einem Stator nach den in Anspruch 1 angegebenen Merkmalen gelöst.

Wichtige Merkmale der Erfindung bei dem Elektromotor mit einem Stator sind, dass der Stator in einem Gehäuse des Elektromotors aufgenommen ist,
wobei das Gehäuse ein Gussteil, insbesondere bearbeitetes Stranggussteil, aufweist, an dessen erstem axialem Endbereich ein Ringabschnitt, insbesondere ein hohlzylindrischer Ringabschnitt, ausgeformt ist, insbesondere drehend herausgeschnitten ist,
wobei auf dem Ringabschnitt ein Gehäuseteil vorgesehen, insbesondere aufgeschoben angeordnet, ist und mit dem Gehäuseteil kraftschlüssig, insbesondere thermisch aufgeschrumpft, und/oder klebeverbunden verbunden ist,
wobei das Gussteil zumindest einen axial durchgehenden Kanal, insbesondere für ein Kühlmittel, aufweist, welcher in einen von dem Ringabschnitt und von dem Gehäuseteil begrenzten Taschenbereich mündet.

Von Vorteil ist dabei, dass ein kompakter leistungsfähiger Motor herstellbar ist, der mit einem Kühlmittel, wie Wasser, Gas, insbesondere Luft, oder Öl, kühlbar ist. Dabei ist das Kühlmittel in einem geschlossenen Kreislauf führbar und von einer Pumpe antreibbar. Das Kühlmittel ist direkt im Gussteil axial durchführbar und nimmt somit die Wärme des Motors direkt auf. Von den Statorwicklungen muss also der Wärmestrom nur durch das Blechpaket des Stators und von dort zum die Kanäle für das Kühlmedium umfassenden Gussteil gelangen.

Bei einer vorteilhaften Ausgestaltung ist am anderen axialen Endbereich des Gussteils ein zweiter Ringabschnitt, insbesondere ein hohlzylindrischer Ringabschnitt, ausgeformt, insbesondere drehend herausgeschnitten,
wobei auf dem zweiten Ringabschnitt ein Gehäuseteil vorgesehen, insbesondere aufgeschoben angeordnet, ist und mit dem Gehäuseteil kraftschlüssig, insbesondere thermisch aufgeschrumpft, und/oder klebeverbunden verbunden ist. Von Vorteil ist dabei, dass der runde Stator in eine entsprechend runde Ausnehmung des Gussteils einführbar ist. Das Gussteil ist also an seiner Innenseite zylindrisch ausgeführt. Somit ist ein runder Stator einführbar, der eine Rotorwelle, insbesondere eine mit Dauermagneten bestückte Rotorwelle, aufnimmt. Die Außenkontur des Gussteils ist in einem mittleren Abschnitt unrund ausführbar, so dass die Kanäle für das Kühlmittel in den radial hervorstehenden Eckbereichen anordenbar sind. In einem axial vorderen und einem axial hinteren Endabschnitt sind jedoch die wiederum zylindrisch ausgeführten Ringabschnitte angeordnet. Diese sind vorzugsweise durch Drehen aus dem Rohgussteil herausgeschnitten, insbesondere wobei das Rohgussteil ein Stranggussteil ist. Auf diese Ringabschnitte ist jeweils ein Gehäuseteil aufsteckbar, das einen entsprechend zylindrischen Aufnahmebereich aufweist und dessen äußere Kontur nicht kreisrund ist. Somit ist nach Zusammenfügen, insbesondere also thermischem Aufschrumpfen und/oder Klebeverbinden des Gehäuseteils mit dem Gussteil, ein Gehäuse des Motors erzeugt, welches ein unrundes Äußeres aufweist.

Bei einer vorteilhaften Ausgestaltung ist der erste und/oder der zweite Ringabschnitt ein zylindrischer Kragenabschnitt. Von Vorteil ist dabei, dass nach radial innen und nach radial außen eine zylindrische Kontur vorgesehen ist, so dass ein Verbinden mit einem Stator nach radial innen und mit einem Gehäuseteil nach radial außen einfach ermöglicht ist.

Bei einer vorteilhaften Ausgestaltung sind in Umfangsrichtung zwischen den von einem Gehäuseteil begrenzten, in Umfangsrichtung zueinander nächstbenachbarten Taschenbereichen Verbindungsbereiche, insbesondere welche die Taschenbereiche verbinden, angeordnet oder Unterbrechungen, insbesondere welche die Taschenbereiche voneinander trennen, angeordnet. Von Vorteil ist dabei, dass eine mäanderförmige Kühlmittelströmung durch das Gehäuse des Motors leitbar ist. Dabei ist ein Verbindungsbereich in einfacher Weise dadurch herstellbar, dass das Gehäuseteil beabstandet ist vom Ringabschnitt des Gussteils, und eine Unterbrechung dadurch herstellbar, dass das Gehäuseteil den Ringabschnitt des Gussteils berührt. Der Verbindungsabschnitt mündet dabei an seinen beiden in Umfangsrichtung angeordneten Endbereichen in einen jeweiligen Taschenbereich. Jeder Taschenbereich ist wiederum durch eine Beabstandung des Gehäuseteils vom entsprechenden Ringabschnitt des Gussteils erzeugt.

Bei einer vorteilhaften Ausgestaltung ist in demjenigen Umfangswinkelbereich, in welchem ein vom ersten Gehäuseteil begrenzter Verbindungsbereich angeordnet ist, eine Unterbrechung angeordnet, die vom zweiten Gehäuseteil begrenzt ist,
insbesondere also mit einem Verbindungsbereich am ersten axialen Endbereich eine Unterbrechung am zweiten axialen Endbereich korrespondiert und
mit einer Unterbrechung am ersten axialen Endbereich ein Verbindungsbereich am zweiten axialen Endbereich korrespondiert. Von Vorteil ist dabei, dass eine mäandrierende Kühlmittelstruktur in einfacher Weise erzeugbar ist.

Bei einer vorteilhaften Ausgestaltung ist an einem Gehäuseteil eine radial durchgehende Ausnehmung, insbesondere Zuleitung oder Ableitung, angeordnet, die in einen der Taschenbereiche mündet. Von Vorteil ist dabei, dass eine Zuleitung beziehungsweise Ableitung für Kühlmittel in einfacher Weise herstellbar ist, insbesondere durch eine jeweilige Radialbohrung.

Bei einer vorteilhaften Ausgestaltung sind das oder die Gehäuseteile und das Gussteil aus Aluminium gefertigt. Von Vorteil ist dabei, dass ein Material mit einer im Vergleich zu Stahl hohen Wärmeleitfähigkeit verwendbar ist.

Bei einer vorteilhaften Ausgestaltung ist ein Lagerschild mit einem Gehäuseteil schraubverbunden, insbesondere wobei das Gehäuseteil eine Gewindebohrung aufweist. Von Vorteil ist dabei, dass die vom Lager aufgenommenen Querkräfte und Axialkräfte nicht direkt ins Gussteil, sondern indirekt über ein jeweiliges Gehäuseteil leitbar sind. Somit muss die kraftschlüssige und/oder Klebeverbindung zwischen Gehäuseteil und Ringabschnitt des Gussteils sowie die Schweißverbindung zwischen Gehäuseteil und Gussteil derart belastbar gestaltet werden, dass die Kräfte durchleitbar sind, ohne dass die durch die Verbindungen geschaffene Abdichtung der Kühlmittelleitung, insbesondere Kühlkanalstruktur, gefährdet sind. Hierzu ist im Bereich der kraftschlüssigen Verbindung Klebstoff zusätzlich vorsehbar, der auch Dichtigkeit verbessert.

Bei einer vorteilhaften Ausgestaltung ist ein Ringabschnitt als Zentriermittel für das Lagerschild verwendet. Von Vorteil ist dabei, dass das Gussteil nicht nur Gehäusefunktion für den Stator, sondern auch Zentrierfunktion für das Lagerschild ausführt.

Bei einer vorteilhaften Ausgestaltung ist im Lagerschild ein Lager der Rotorwelle aufgenommen, insbesondere wobei der Außenring des Lagers in einem Ringteil, insbesondere Stahl-Ringteil, aufgenommen ist, das im Gehäuseteil eingegossen ist Von Vorteil ist dabei, dass thermisch bedingte Längenänderungen vermindert sind und durch die Materialgleichheit zwischen Außenring und Ringteil die thermisch bedingten Spannungen verringert sind.

Bei einer vorteilhaften Ausgestaltung ist der Stator in einer zylindrischen Ausnehmung des Gussteils aufgenommen. Von Vorteil ist dabei, dass ein rotativer Motor vorsehbar ist.

Bei einer vorteilhaften Ausgestaltung weisen die Gehäuseteile jeweils eine in Umfangsrichtung unrunde äußeren Oberfläche auf. Von Vorteil ist dabei, dass ein Quadratflansch am Motor vorsehbar ist, so dass dieser als Lagerschild oder Flanschteil mit dem jeweiligen Gehäuseteil in einfacher weise verbindbar ist, insbesondere wobei die Verbindungsschrauben im durch die Unrundheit radial hervorstehenden Bereich anordenbar sind.

Bei einer vorteilhaften Ausgestaltung weist das Gussteil eine in Umfangsrichtung unrunde äußere Oberfläche auf, wobei die axial durchgehenden Kanäle in den Eckbereichen des Gussteils angeordnet sind. Von Vorteil ist dabei, dass die Kanäle platzsparend anordenbar sind.

Bei einer vorteilhaften Ausgestaltung weist in einem Umfangswinkelbereich, welcher eine von einem Gehäuseteil begrenzte Unterbrechung abdeckt, das Gehäuseteil einen nach radial innen gerichteten zylindrisch geformten Oberflächenabschnitt auf, der das Gussteil berührt. Von Vorteil ist dabei, dass die Unterbrechung in einfacher Weise herstellbar ist.

Bei einer vorteilhaften Ausgestaltung weist in einem Umfangswinkelbereich, welcher einen von einem Gehäuseteil begrenzte Verbindungsabschnitt abdeckt, das Gehäuseteil einen nach radial innen gerichteten plan geformten Oberflächenabschnitt auf, der beabstandet ist vom Gussteil. Von Vorteil ist dabei, dass der Verbindungsbereich in einfacher Weise herstellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Querschnitt durch einen erfindungsgemäßen Elektromotor gezeigt.

In der Figur 2 ist eine Schrägansicht des Elektromotors gezeigt.

In der Figur 3 ist das Gehäuse des Elektromotors explodiert dargestellt in einer ersten Blickrichtung.

In der Figur 4 ist eine andere Blickrichtung als in Figur 3 gezeigt.

In der Figur 5 ist ein Querschnitt durch einen Teil des erfindungsgemäßen Elektromotors in anderer Schnittrichtung als in Figur 1 gezeigt.

In der Figur 6 ist eine zur Figur 5 gehörige Schrägansicht gezeigt.

In der Figur 7 ist die Kühlmittelströmung gezeigt.

In der Figur 8 ist die Verbindung zwischen dem Gehäuseteil 2 und dem Stranggussteil 1 im Querschnitt gezeigt, wobei eine Schweißnaht 81 zwischen Gehäuseteil 2 und äußerer Oberfläche des Stranggussteils 1 das Kühlmittel-Leitungssystem, insbesondere auch die Taschenbereiche und Kanäle, abdichtet gegen die Umgebung. Außerdem ist das Gehäuseteil 2 gegen den zylindrischen Ringabschnitt des Stranggussteils 1 mittels einer zusätzlichen Klebstoffschicht abgedichtet, so dass die in diesem Bereich vorgesehene thermische Aufschrumpfverbindung zusätzlich verstärkt und abgedichtet wird.

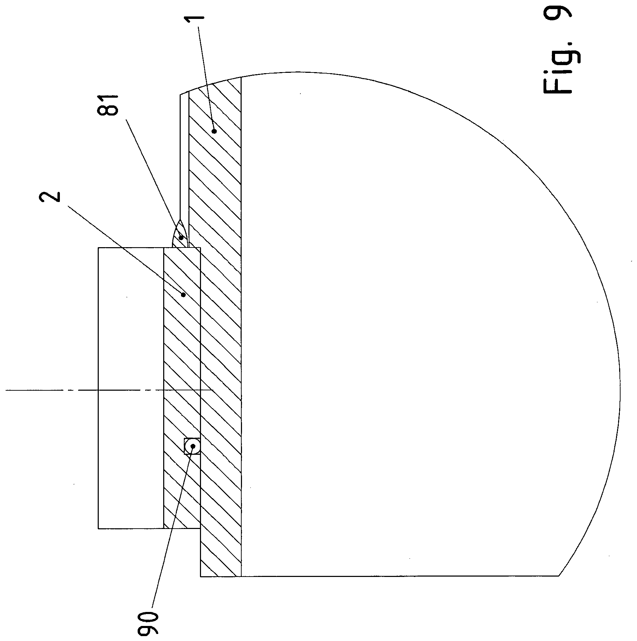

In der Figur 9 ist eine alternative Verbindung zwischen dem Gehäuseteil 2 und dem Stranggussteil 1 gezeigt, wobei ein Dichtungsring 90 zur Herstellung der Dichtheit zwischen dem Gehäuseteil 2 und dem zylindrischen Ringabschnitt des Stranggussteils 1 in einer den Dichtungsring 90 aufnehmenden Ringnut vorgesehen ist. Die Klebstoffschicht 80 darf zusätzlich vorgesehen sein, um die Verbindung zu verstärken.

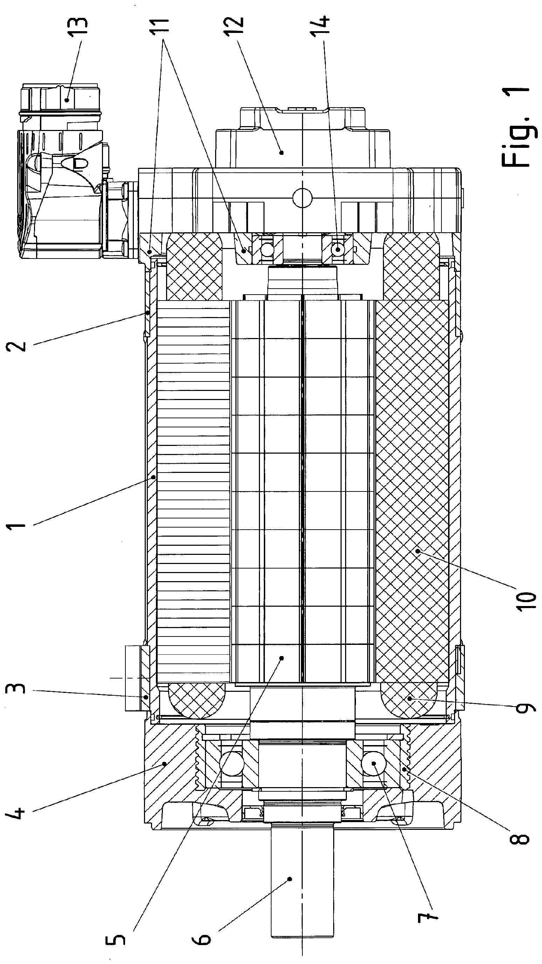

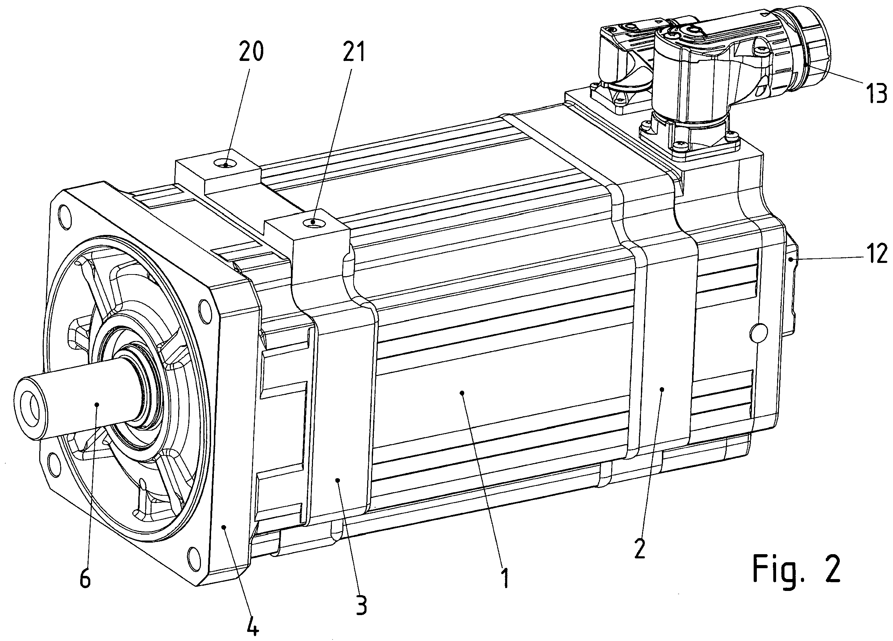

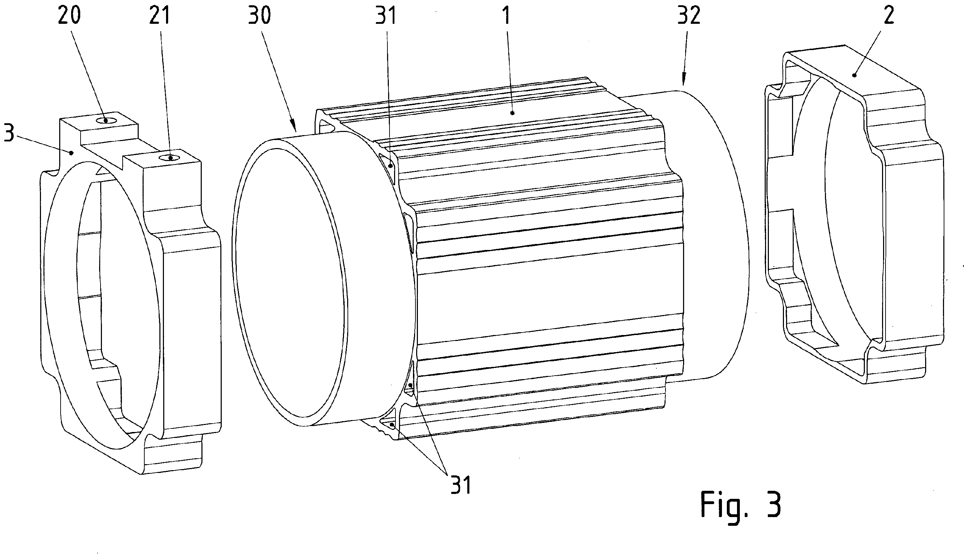

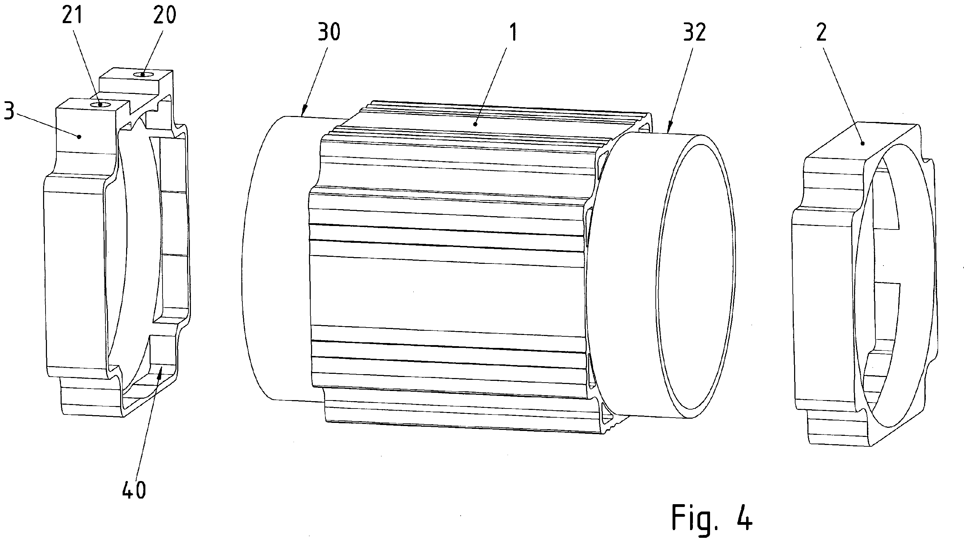

Wie in Figur 1 und 2 zusammen mit Figur 3 und 4 gezeigt, ist das Gehäuse des Elektromotors aus einem mittig angeordneten Stranggussteil 1 gebildet, das an seinem axial vorderen und hinteren Endbereich jeweils einen zylindrischen Kragenabschnitt (30, 32) aufweist, der in Figur 1 nicht gezeigt ist.

Auf diesen zylindrischen Kragenabschnitt (30, 32) ist jeweils ein Gehäuseteil (2, 3) thermisch aufgeschrumpft, dass hierzu eine zylindrische Ausnehmung aufweist, mit welcher es auf den zylindrisch ausgeführten Kragenabschnitt (30, 32) aufschiebbar ist.

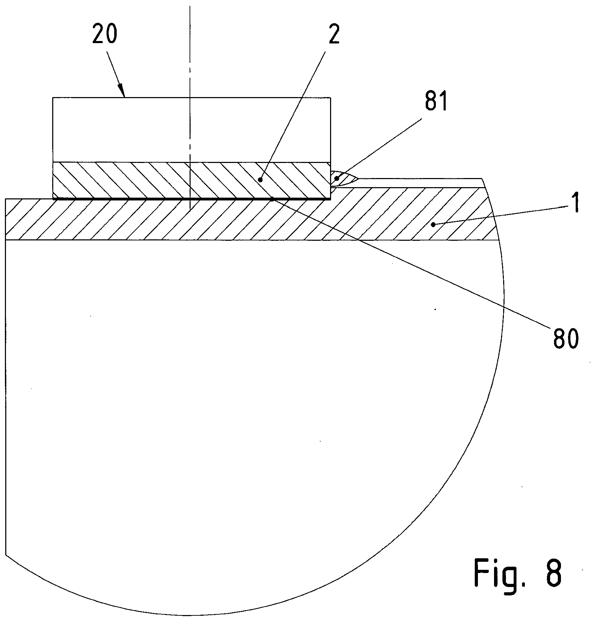

Wie in Figur 8 gezeigt, ist zusätzlich zwischen dem jeweiligen Gehäuseteil (2, 3) und dem jeweiligen Kragenabschnitt (30, 32) auch Klebstoff 80 eingebracht, wie in Figur 8 näher dargestellt.

Im Innenraum des Gehäuses des Elektromotors ist ein bewickeltes Blechpaket, also der Stator des Elektromotors, vorgesehen, wobei der Stator ebenfalls durch thermisches Aufschrumpfen des Stranggussteils auf das Blechpaket des Stators verbunden ist.

Wie in Figur 1 gezeigt, ist das Blechpaket 10 des Stators mit Statorwicklungen bewickelt, deren Umlenkbereiche als Wickelköpfe 9 geformt sind.

An den axialen Stirnseiten des Gehäuses sind jeweils Lagerschilde (4, 11) angeordnet, die ein jeweiliges Lager (7, 14) aufnehmen, über welche die Rotorwelle 6 gelagert ist. Am äußeren Umfang der Rotorwelle sind Dauermagnete 5 angeordnet, die mit dem von den Statorwicklungen erzeugten Magnetfeld wechselwirken.

Radial zwischen Lagerschild 4 und Lager 7 ist ein Stahlring 8 angeordnet, so dass der Außenring des Lagers aus Stahl ausführbar ist und das Lagerschild 4 aus Aluminium, wobei der Stahlring 8 eingegossen ist in das aus Aluminium gefertigte Lagerschild 4. Somit sind thermisch bedingte unterschiedliche Ausdehnungen des Lagerschilds 4 und des Außenrings des Lagers 7 kompensierbar.

Am ersten axialen Endbereich der Rotorwelle 6 ist eine anzutreibende Vorrichtung verbindbar, am anderen axialen Endbereich ein Winkelsensor 12 zur Detektion der Winkellage der Rotorwelle 6 angeordnet

Am Lagerschild 11 sind Steckverbinderteile 13 angeordnet, mit welchem Leistungs- und Sensorsignalleitungen steckverbindbar sind.

Das Stranggussteil 1 weist eine zylindrische Innenbohrung, in welchem der Stator aufnehmbar ist.

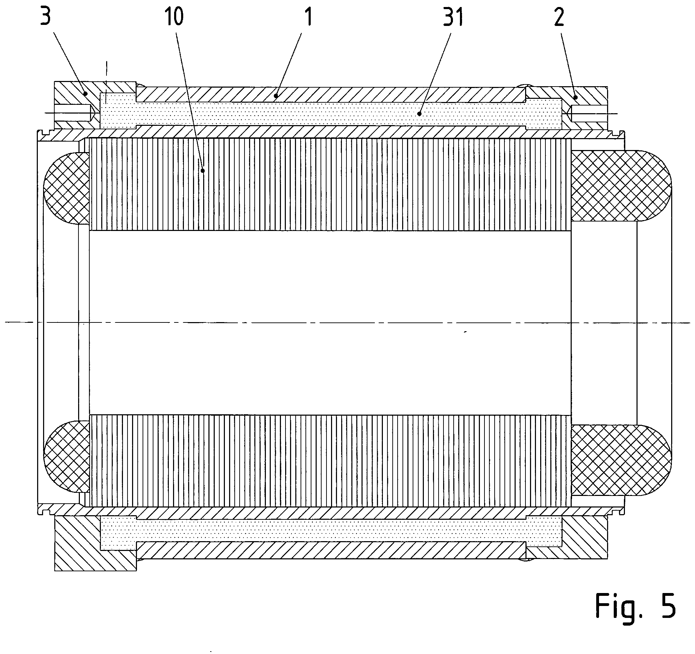

Wie in Figur 5 gezeigt, weist das Stranggussteil 1 axial verlaufende Kanäle 31 auf, welche von einem Kühlmittel durchströmbar sind. Als Kühlmittel ist eine Flüssigkeit, wie Öl oder Wasser, verwendbar.

Die Kanäle 31 münden in Taschenbereiche 70 der Gehäuseteile (2, 3).

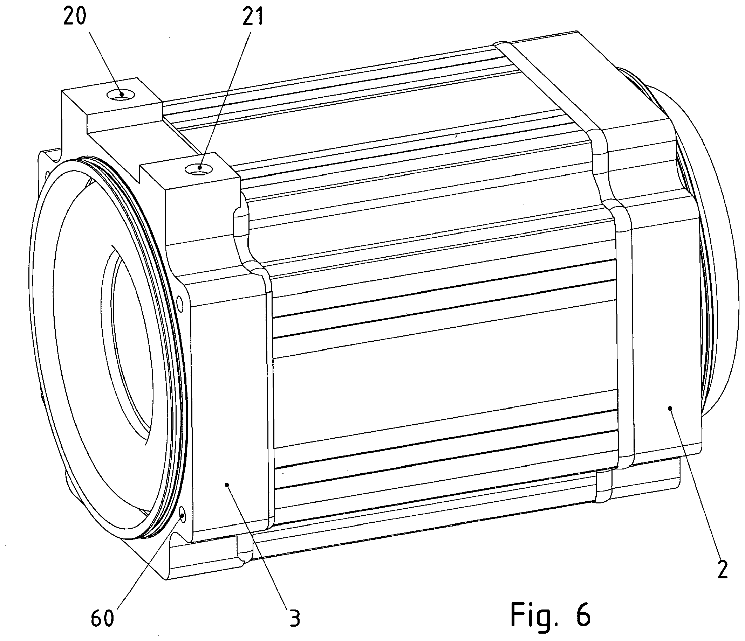

Wie in Figur 6 gezeigt, weist das erste Gehäuseteil 3 weist einen Zulauf 21 und einen Ablauf 20 auf, die als jeweilige Ausnehmung von der äußeren Umgebung zu einem Taschenbereich des Gehäuseteils 3 führen.

Jeder Taschenbereich ist nach radial innen begrenzt von dem jeweiligen zylindrischen Kragenabschnitt (30, 32) des Stranggussteils 1 und nach radial außen von dem jeweiligen Gehäuseteil (2, 3).

Die am Umfang des zylindrischen Kragenabschnitts (30,32) angeordneten voneinander beabstandeten Taschenbereiche 70 sind in Umfangsrichtung jeweils verbunden mittels eines jeweiligen Verbindungsbereichs 71 oder nicht verbunden mittels einer Unterbrechung 72.

Ein jeweiliger von dem Gehäuseteil 2 umfasster Taschenbereich 70 ist mit einem jeweiligen vom Gehäuseteil 3 umfassten Taschenbereich 70 mittels eines jeweiligen, im Stranggussteil 1 axial verlaufenden Kanals 73 verbunden.

Jedem Verbindungsbereich 71 des ersten Gehäuseteils 2 ist an gleicher Umfangsposition eine Unterbrechung 72 des anderen Gehäuseteils 3 zugeordnet. Entsprechend ist jeder Unterbrechung 72 des Gehäuseteils 3 an gleicher Umfangsposition ein Verbindungsbereich 71 des Gehäuseteils 2 zugeordnet.

Der jeweilige Verbindungsbereich 71 ist wiederum nach radial innen begrenzt durch den jeweiligen Kragenabschnitt (30, 32) und nach radial außen durch das Gehäuseteil (2, 3).

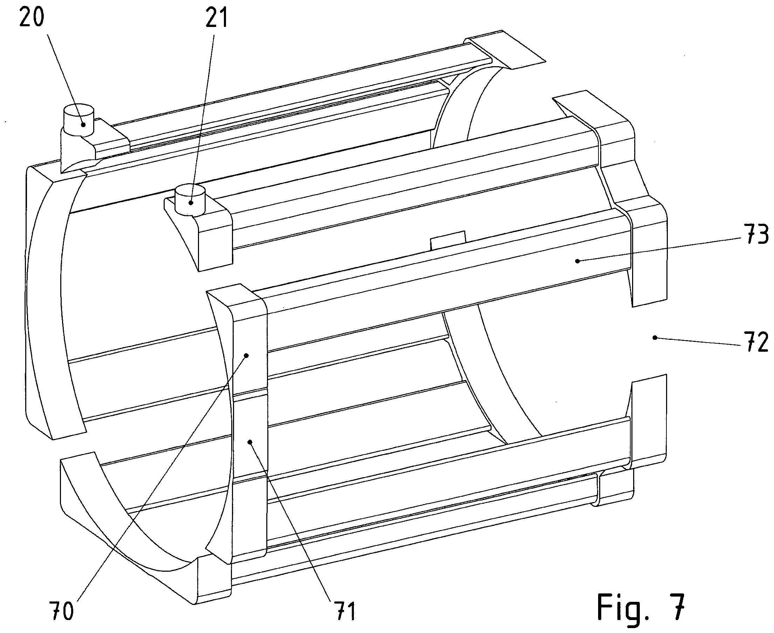

Somit münden die Verbindungsbereiche 71 derart in Taschenbereiche 70, dass ein mäandrierender Kühlmitteldurchlauf durch das Gehäuse des Elektromotors erreicht ist. Dabei verläuft der mäandrierende Durchlauf in Umfangsrichtung, wie in Figur 7 gezeigt.

Wichtig ist bei der Erfindung, dass das Stranggussteil 1 einen zylindrischen Aufnahmebereich für den Stator, insbesondere also das mit Statorwicklungen bewickelte Blechpaket des Stators, bietet. Das auf den jeweiligen zylindrischen Kragenabschnitt (30, 32) aufgeschobene, thermisch aufgeschrumpft und klebe-verbundene Gehäuseteil (2, 3) ist an seiner radial innen liegenden Seite ebenfalls zylindrisch geformt, weist aber an seiner radial außenliegenden Oberfläche eine unrunde, also in Umfangsrichtung ungleichmäßige Form auf. Insbesondere ist das Gehäuseteil (2, 3) im Wesentlichen quadratisch ausgebildet. Zur Abdichtung zwischen Gehäuseteil 2 beziehungsweise 3 und Stranggussteil 1 ist eine Schweiß- und/oder Klebe-Verbindung an der äußeren Oberfläche vorgesehen. Somit ist der Kühlmittelkreislauf abgedichtet gegen die äußere Umgebung. Auf diese Weise strömt also das Kühlmittel von den Taschenbereichen 70 in die Kanäle 73, ohne dass Verluste an die Umgebung hin auftreten.

Die Lagerflansche 4 und 11 sind mit dem jeweiligen Gehäuseteil (2, 3) schraubverbunden, wobei axial verlaufende Gewindebohrlöcher in die Eckabschnitte des Gehäuseteils (2, 3) eingebracht sind. Dabei sind die Eckabschnitte mittels der unrunden Ausformung radial hervorstehend.

Zur Bildung der Verbindungsbereiche 71 weisen die Gehäuseteile im Umfangswickelbereich der Verbindungsabschnitte 71 plane Innenoberflächenabschnitte auf. Somit ist durch eine Beabstandung der planen Innenoberflächenabschnitte von dem jeweiligen zylindrischen Kragenabschnitt (30,32) der Verbindungsabschnitt zwischen zwei in Umfangsrichtung angrenzenden Taschenbereichen 70 in einfacher Weise geschaffen.

Im Umfangswinkelbereich der Unterbrechungen 72 liegt das Gehäuseteil am jeweiligen zylindrischen Kragenabschnitt (30,32) an. Dabei ist somit der entsprechende Innenoberflächenabschnitt zylindrisch ausgebildet und schmiegt sich an den zylindrischen Kragenabschnitt (30, 32) an.

Als Kühlmittel wird vorzugsweise Wasser verwendet, wobei dem Wasser gegebenenfalls Frostschutzmittel zugesetzt ist. Es ist aber auch Schmieröl eines vom Elektromotor angetriebenen Getriebes verwendbar, so dass kein Wasser benötigt wird. In jedem Fall wird das Kühlmittel von einer Pumpe angetrieben. Vorzugsweise wird diese Pumpe von der Rotorwelle 6 des Elektromotors oder einer hiervon angetriebenen Welle, insbesondere des Getriebes, angetrieben. Somit ist die Kühlleistung von der Drehzahl der Rotorwelle 6 abhängig.

Die von den Lagern (7, 14) über die Rotorwelle 6 aufgenommen Kräfte, insbesondere Querkräfte oder Axialkräfte, werden nicht direkt an das Stranggussteil 1 sondern über das jeweilige Gehäuseteil (2, 3) an das Stranggussteil 1 abgeleitet. Somit erfolgt diese Kraftableitung über die kraftschlüssige, also thermische Aufschrumpf-, sowie Klebe-Verbindung zwischen Stranggussteil 1 und jeweiligem Gehäuseteil (2, 3).

Bei weiteren erfindungsgemäßen Ausführungsbeispielen ist statt des beschriebenen mäandrierenden Kühlmittelkreislaufs der Zulauf 21 am ersten Gehäuseteil 2 angeordnet und der Ablauf am zweiten Gehäuseteil 20, wobei die am ersten Gehäuseteil 2 ausgebildeten Taschenbereiche 70 mit dem Zulauf 21 verbunden sind und jeweils in einen durch das Stranggussteil 1 axial verlaufenden Kanal 73 münden, der wiederum in einen jeweiligen Taschenbereich 70 des anderen Gehäuseteils 3 mündet, wobei die am anderen Gehäuseteil 3 angeordneten Taschenbereiche 70 mit dem Ablauf 20 verbunden sind.

### Bezugszeichenliste

- 1: Stranggussteil
- 2: Gehäuseteil
- 3: Gehäuseteil
- 4: Lagerschild
- 5: Dauermagnete
- 6: Rotorwelle
- 7: Lager
- 8: Stahlring
- 9: Wickelkopf
- 10: Blechpaket
- 11: Lagerschild
- 12: Winkelsensor
- 13: Steckverbinderteil
- 14: Lager
- 20: Ablauf
- 21: Zulauf
- 30: Kragenabschnitt, zylindrisch
- 31: Kanal
- 32: Kragenabschnitt, zylindrisch
- 40: Taschenbereiche
- 60: Sacklochgewinde
- 70: Taschenbereich
- 71: Verbindungskanal, Verbindungsbereich
- 72: Unterbrechung
- 73: Kanal
- 80: Klebestoff
- 81: Schweiß-/Klebenaht
- 90: Dichtungsring

## Patentansprüche

1. Elektromotor mit einem Stator,
wobei der Stator in einem Gehäuse des Elektromotors aufgenommen ist,
wobei das Gehäuse ein Gussteil, insbesondere bearbeitetes Stranggussteil (1), aufweist, an dessen erstem axialem Endbereich ein Ringabschnitt, insbesondere ein hohlzylindrischer Ringabschnitt, ausgeformt ist, insbesondere drehend herausgeschnitten ist,
wobei auf dem Ringabschnitt ein Gehäuseteil (2, 3) vorgesehen, insbesondere aufgeschoben angeordnet, ist und mit dem Gehäuseteil (2, 3) kraftschlüssig, insbesondere thermisch aufgeschrumpft, und/oder klebeverbunden verbunden ist,
wobei das **Gehäuse** zumindest einen axial durchgehenden Kanal, insbesondere für ein Kühlmittel, aufweist, welcher in einen von dem Ringabschnitt und von dem Gehäuseteil (2, 3) begrenzten Taschenbereich mündet,
**wobei in Umfangsrichtung zwischen den von dem Gehäuseteil (2, 3) begrenzten, in Umfangsrichtung zueinander nächstbenachbarten Taschenbereichen (40) Verbindungsbereiche, welche die Taschenbereiche (40) verbinden, oder Unterbrechungen, welche die Taschenbereiche (40) voneinander trennen, angeordnet sind,**
**wobei ein Lagerschild (4, 11) mit dem Gehäuseteil (2, 3) schraubverbunden ist,**
**wobei im Lagerschild (4, 11) ein Lager (7, 14) der Rotorwelle (6) aufgenommen ist,**
**dadurch gekennzeichnet, dass**
**der Außenring des Lagers in einem Stahl-Ringteil aufgenommen ist, das im Lagerschild (4, 11) eingegossen ist.**

2. Elektromotor nach Anspruch 1,
**dadurch gekennzeichnet, dass**
am anderen axialen Endbereich des **Gehäuses** ein zweiter Ringabschnitt, insbesondere ein hohlzylindrischer Ringabschnitt, ausgeformt ist, insbesondere drehend herausgeschnitten ist,
wobei auf dem zweiten Ringabschnitt ein Gehäuseteil (2, 3) vorgesehen, insbesondere aufgeschoben angeordnet, ist und mit dem Gehäuseteil (2, 3) kraftschlüssig, insbesondere thermisch aufgeschrumpft, und/oder klebeverbunden verbunden ist.

3. Elektromotor nach mindestens einem der vorangegangenen Ansprüche,
**dadurch gekennzeichnet, dass**
der erste und/oder der zweite Ringabschnitt ein zylindrischer Kragenabschnitt (30, 32) ist.

4. Elektromotor nach mindestens einem der vorangegangenen Ansprüche,
**dadurch gekennzeichnet, dass**
in demjenigen Umfangswinkelbereich, in welchem ein vom ersten Gehäuseteil (2, 3) begrenzter Verbindungsbereich angeordnet ist, eine Unterbrechung (72) angeordnet ist, die vom zweiten Gehäuseteil (2, 3) begrenzt ist,
insbesondere also mit einem Verbindungsbereich am ersten axialen Endbereich eine Unterbrechung (72) am zweiten axialen Endbereich korrespondiert und
mit einer Unterbrechung (72) am ersten axialen Endbereich ein Verbindungsbereich am zweiten axialen Endbereich korrespondiert.

5. Elektromotor nach mindestens einem der vorangegangenen Ansprüche,
**dadurch gekennzeichnet, dass**
an einem Gehäuseteil (2, 3) eine radial durchgehende Ausnehmung, insbesondere Zuleitung oder Ableitung, angeordnet ist, die in einen der Taschenbereiche (70) mündet.

6. Elektromotor nach mindestens einem der vorangegangenen Ansprüche,
**dadurch gekennzeichnet, dass**
das oder die Gehäuseteile (2, 3) und das **Gehäuse** aus Aluminium gefertigt sind.

7. Elektromotor nach mindestens einem der vorangegangenen Ansprüche,
**dadurch gekennzeichnet, dass**
**das Gehäuseteil (2, 3) eine Gewindebohrung aufweist.**

8. Elektromotor nach mindestens einem der vorangegangenen Ansprüche,
**dadurch gekennzeichnet, dass**
ein Ringabschnitt als Zentriermittel für das Lagerschild (4, 11) verwendet ist.

9. Elektromotor nach mindestens einem der vorangegangenen Ansprüche,
**dadurch gekennzeichnet, dass**
der Stator in einer zylindrischen Ausnehmung des **Gehäuses** aufgenommen ist.

10. Elektromotor nach mindestens einem der vorangegangenen Ansprüche,
**dadurch gekennzeichnet, dass**
die Gehäuseteile (2, 3) jeweils eine in Umfangsrichtung unrunde äußeren Oberfläche aufweisen.

11. Elektromotor nach mindestens einem der vorangegangenen Ansprüche,
**dadurch gekennzeichnet, dass**
das **Gehäuse** eine in Umfangsrichtung unrunde äußeren Oberfläche aufweisen, wobei die axial durchgehenden Kanäle in den Eckbereichen des **Gehäuses** angeordnet sind.

12. Elektromotor nach mindestens einem der vorangegangenen Ansprüche,
**dadurch gekennzeichnet, dass**
in einem **von** einer **von einem Gehäuseteil (2, 3)** begrenzten **Unterbrechung (72) überdeckten** Umfangswinkelbereich das Gehäuseteil (2, 3) einen nach radial innen gerichteten zylindrisch geformten Oberflächenabschnitt aufweist, der das **Gehäuse** berührt.

13. Elektromotor nach mindestens einem der vorangegangenen Ansprüche,
**dadurch gekennzeichnet, dass**
in einem **von einem von einem Gehäuseteil (2, 3) begrenzten Verbindungsabschnitt überdeckten** Umfangswinkelbereich das Gehäuseteil (2, 3) einen nach radial innen gerichteten plan geformten Oberflächenabschnitt aufweist, der beabstandet ist vom **Gehäuse.**

## Claims

1. An electric motor having a stator,
wherein the stator is received in a housing of the electric motor,
wherein the housing has a cast part, in particular a machined continuously cast part (1), at whose first axial end region there is formed, in particular cut out by turning, an annular portion, in particular a hollow-cylindrical annular portion,
wherein a housing part (2, 3) is provided on the annular portion, in particular is arranged in a pushed-on manner, and is connected to the housing part (2, 3) in a force-locked manner, in particular in a heat shrink-fitted manner, and/or in an adhesively bonded manner,
wherein the housing has at least one axially through-passing channel, in particular for a cooling medium, which channel opens into a pocket region bounded by the annular portion and by the housing part (2, 3),
wherein in the circumferential direction, connecting regions connecting the pocket regions (40) or gaps separating the pocket regions (40) from one another are arranged between the pocket regions (40) bounded by the housing part (2, 3) and next adjacent to one another in the circumferential direction,
wherein an end shield (4, 11) is screw-connected to the housing part (2, 3),
wherein a bearing (7, 14) of the rotor shaft (6) is received in the end shield (4, 11), **characterised in that**
the outer ring of the bearing is received in a steel annular part which is cast in the end shield (4, 11).

2. An electric motor according to claim 1,
**characterised in that**
a second annular portion, in particular a hollow-cylindrical annular portion, is formed, in particular cut out by turning, at the other axial end region of the housing,
wherein a housing part (2, 3) is provided on the second annular portion, in particular is arranged in a pushed-on manner, and is connected to the housing part (2, 3) in a force-locked manner, in particular in a heat shrink-fitted manner, and/or in an adhesively bonded manner.

3. An electric motor according to at least one of the preceding claims,
**characterised in that**
the first and/or the second annular portion is a cylindrical collar portion (30, 32).

4. An electric motor according to at least one of the preceding claims,
**characterised in that**
**in that** circumferential angular region in which a connecting region bounded by the first housing part (2, 3) is arranged there is arranged a gap (72) which is bounded by the second housing part (2, 3),
in particular therefore a gap (72) at the second axial end region corresponds to a connecting region at the first axial end region and a connecting region at the second axial end region corresponds to a gap (72) at the first axial end region.

5. An electric motor according to at least one of the preceding claims,
**characterised in that**
a radially through-passing cut-out, in particular an inlet or outlet, opening into one of the pocket regions (70) is arranged at a housing part (2, 3).

6. An electric motor according to at least one of the preceding claims,
**characterised in that**
the housing part(s) (2, 3) and the housing are manufactured of aluminium.

7. An electric motor according to at least one of the preceding claims,
**characterised in that**
the housing part (2, 3) has a tapped bore.

8. An electric motor according to at least one of the preceding claims,
**characterised in that**
an annular portion is used as a centering means for the end shield (4, 11).

9. An electric motor according to at least one of the preceding claims,
**characterised in that**
the stator is received in a cylindrical cut-out of the housing.

10. An electric motor according to at least one of the preceding claims,
**characterised in that**
the housing parts (2, 3) each have an outer surface which is non-circular in the circumferential direction.

11. An electric motor according to at least one of the preceding claims,
**characterised in that**
the housing has an outer surface which is non-circular in the circumferential direction, wherein the axially through-passing channels are arranged in the corner regions of the housing.

12. An electric motor according to at least one of the preceding claims,
**characterised in that**
in a circumferential angular region covered by a gap (72) bounded by a housing part (2, 3), the housing part (2, 3) has a radially inwards directed, cylindrically shaped surface portion which contacts the housing.

13. An electric motor according to at least one of the preceding claims,
**characterised in that**
in a circumferential angular region covered by a connecting portion bounded by a housing part (2, 3), the housing part (2, 3) has a radially inwards directed, plane surface portion which is at a distance from the housing.

## Revendications

1. Moteur électrique doté d'un stator,
lequel stator est logé dans un carter dudit moteur électrique,
ledit carter comportant une pièce coulée, notamment une pièce (1) usinée par coulée continue au niveau de la première région extrême axiale de laquelle est ménagée, notamment par découpe rotative, une zone annulaire se présentant en particulier comme une zone annulaire cylindrique creuse,
une partie (2, 3) du carter étant prévue sur ladite zone annulaire, sur laquelle elle est notamment enfilée, la liaison avec ladite partie (2, 3) du carter étant instaurée par engagement positif, en particulier par thermorétraction, et/ou par collage,
ledit carter étant muni d'au moins un canal axialement ininterrompu, notamment dédié à un agent de refroidissement et débouchant dans une zone alvéolée, délimitée par la zone annulaire et par la partie (2, 3) dudit carter,
sachant que des zones de liaison reliant les zones alvéolées (40), ou des discontinuités séparant les unes des autres lesdites zones alvéolées (40), sont interposées, dans la direction circonférentielle, entre lesdites zones alvéolées (40) qui sont délimitées par la partie (2, 3) du carter et sont intimement voisines les unes des autres dans ladite direction circonférentielle,
un bouclier de palier (4, 11) étant relié par vissage à ladite partie (2, 3) du carter,
un palier (7, 14) de l'arbre rotorique (6) étant logé dans ledit bouclier de palier (4, 11), **caractérisé par le fait que**
la bague extérieure du palier est logée dans une partie annulaire en acier, intégrée par coulée dans le bouclier de palier (4, 11).

2. Moteur électrique selon la revendication 1,
**caractérisé par le fait**
**qu'**une seconde zone annulaire, en particulier une zone annulaire cylindrique creuse, est ménagée au niveau de l'autre région extrême axiale du carter, notamment par découpe rotative,
une partie (2, 3) du carter étant prévue sur ladite seconde zone annulaire, sur laquelle elle est notamment enfilée, la liaison avec ladite partie (2, 3) du carter étant instaurée par engagement positif, en particulier par thermorétraction, et/ou par collage.

3. Moteur électrique selon au moins l'une des revendications précédentes,
**caractérisé par le fait que**
la première et/ou la seconde zone(s) annulaire(s) est (sont) une (des) zone(s) cylindrique(s) (30, 32) formant collerette(s).

4. Moteur électrique selon au moins l'une des revendications précédentes,
**caractérisé par le fait**
**qu'**une discontinuité (72), délimitée par la seconde partie (2, 3) du carter, est située dans la plage d'angles périphériques dans laquelle se trouve une zone de liaison délimitée par la première partie (2, 3) dudit carter,
c'est-à-dire qu'une discontinuité (72) concorde par conséquent, au niveau de la seconde région extrême axiale, avec une zone de liaison au niveau de la première région extrême axiale, et
**qu'**une zone de liaison concorde, au niveau de ladite seconde région extrême axiale, avec une discontinuité (72) au niveau de ladite première région extrême axiale.

5. Moteur électrique selon au moins l'une des revendications précédentes,
**caractérisé par le fait**
**qu'**un évidement radialement ininterrompu, notamment un conduit d'afflux ou un conduit d'évacuation débouchant dans l'une (70) des zones alvéolées, est situé sur une partie (2, 3) du carter.

6. Moteur électrique selon au moins l'une des revendications précédentes,
**caractérisé par le fait que**
la ou les parties (2, 3) du carter, et ledit carter, sont fabriqués en aluminium.

7. Moteur électrique selon au moins l'une des revendications précédentes,
**caractérisé par le fait que**
la partie (2, 3) du carter est munie d'un perçage taraudé.

8. Moteur électrique selon au moins l'une des revendications précédentes,
**caractérisé par le fait**
**qu'**une zone annulaire est utilisée en tant que moyen de centrage dévolu au bouclier de palier (4, 11).

9. Moteur électrique selon au moins l'une des revendications précédentes,
**caractérisé par le fait que**
le stator est logé dans un évidement cylindrique du carter.

10. Moteur électrique selon au moins l'une des revendications précédentes,
**caractérisé par le fait que**
les parties (2, 3) du carter sont pourvues, à chaque fois, d'une surface extérieure non circulaire dans la direction circonférentielle.

11. Moteur électrique selon au moins l'une des revendications précédentes,
**caractérisé par le fait que**
le carter est muni d'une surface extérieure non circulaire dans la direction circonférentielle, les canaux axialement ininterrompus étant disposés dans les zones d'angle dudit carter.

12. Moteur électrique selon au moins l'une des revendications précédentes,
**caractérisé par le fait que**,
dans une plage d'angles périphériques couverte par une discontinuité (72) délimitée par une partie (2, 3) du carter, ladite partie (2, 3) du carter est pourvue d'une zone de surface de configuration cylindrique, dirigée radialement vers l'intérieur, qui touche ledit carter.

13. Moteur électrique selon au moins l'une des revendications précédentes,
**caractérisé par le fait que**,
dans une plage d'angles périphériques couverte par une zone de liaison délimitée par une partie (2, 3) du carter, ladite partie (2, 3) du carter est pourvue d'une zone de surface de configuration plane, dirigée radialement vers l'intérieur, qui est située à distance dudit carter.
